# EUROPÄISCHE PATENTSCHRIFT

(11) **EP 2 046 627 B1**
(45) Veröffentlichungstag und Bekanntmachung des Hinweises auf die Patenterteilung: **13.06.2012**
(21) Anmeldenummer: 07765250.1
(22) Anmeldetag: 24.07.2007
(51) Int. Cl.: B62D 25/20

(54) **SEITENSCHWELLER EINER KAROSSERIE EINES KRAFTFAHRZEUGS**
SIDE SILL OF A BODY OF A MOTOR VEHICLE
BAS DE CAISSE LATERAL D'UNE CARROSSERIE DE VEHICULE AUTOMOBILE

(30) Priorität: 28.07.2006 DE 102006034977
(43) Veröffentlichungstag der Anmeldung: 15.04.2009
(73) Patentinhaber: Bayerische Motoren Werke Aktiengesellschaft, 80809 München (DE)
(72) Erfinder: RILL, Roland, 80807 München (DE); MEYER, Oliver, 86899 Landsberg (DE); SCHUSTER, Horst, 82140 Olching (DE); BLOWING, Paul, 80804 München (DE)
(86) Internationale Anmeldenummer: PCT/EP2007/006546
(87) Internationale Veröffentlichungsnummer: WO 2008/012055

(56) Entgegenhaltungen:
- EP-A1- 1 099 584
- DE-A1- 4 140 426
- DE-A1- 10 003 878
- DE-A1-102004 002 297
- US-B1- 6 193 306

## Beschreibung

Die Erfindung betrifft einen Seitenschweller einer Karosserie eines Kraftfahrzeugs nach dem Oberbegriff des Patentanspruchs 1.

Aus der US 6,193,306 B1 ist bereits ein Seitenschweller einer Karosserie eines Kraftfahrzeugs bekannt, der in Blechschalenbauweise zumindest aus einer Außenschale und einer Innenschale aus Blech besteht, die miteinander verschweißt sind.

Ferner ist aus der DE 10 2004 002 297 A1 ein Seitenschweller einer Karosserie eines Kraftfahrzeugs bekannt, der aus einem Schwellerstrangpressprofil besteht. Zu einer örtlichen Versteifung eines Schwellerlängsbereichs dient ein zusätzliches Versteifungsstrangpressprofil, das in das Schwellerstrangpressprofil eingebracht ist. Die beiden Profile liegen zumindest teilweise mit Wandbereichen aneinander an und sind mittels Nieten und / oder Schrauben miteinander verbunden. Das Versteifungsstrangpressprofil kann von einer offenen Stirnseite des Schwellerstrangpressprofils her bis zu einem Versteifungsbereich eingeschoben sein.

Aufgabe der Erfindung ist es, einen Seitenschweller einer Karosserie eines Kraftfahrzeugs zu schaffen, der auf einfache Weise durch ein zusätzliches Versteifungsbauteil verstärkt werden kann.

Diese Aufgabe wird mit einem Seitenschweller einer Karosserie eines Kraftfahrzeugs mit den Merkmalen des Patentanspruchs 1 gelöst.

Erfingdungsgemäß besteht ein Seitenschweller einer Karosserie eines Kraftfahrzeugs in Blechschalenbauweise aus einer Innen- und einer Außenschale aus Blech, die miteinander verschweißt sind. Von einer offenen Stirnseite her ist in den Seitenschweller ein Rollprofil zur Versteifung einschiebbar und am Seitenschweller befestigbar. Auf diese Weise kann ein Seitenschweller nach dem Rohbau der Karosserie des Kraftfahrzeugs durch die Montage des Rollprofils versteift werden. Dies kann beispielsweise für die Fertigung verschiedener Derivate eines Kraftfahrzeugmodells von großem Vorteil sein. So weist die Karosserie eines Cabrios aufgrund des fehlenden Dachs eine geringere Steifigkeit auf als die Karosserie einer Limousine desselben Fahrzeugmodells. Daher benötigt die Karosserie des Cabrios einen Seitenschweller mit einer höheren Seitensteifigkeit. Der erfindungsgemäße Seitenschweller ermöglicht es, dass sowohl beim Cabrio als auch bei der Limousine der gleiche Seitenschweller im Rohbau hergestellt wird, sodass im Rohbau keine Variantenbildung erforderlich ist. Die Karosserie des Cabrios wird nach dem Rohbau durch das Einbringen der Rollprofile in die Seitenschweller versteift, sodass auch diese Karosserie eine ausreichende Steifigkeit aufweist. Die offene Stirnseite ist mit einer Verschlusstülle verschließbar, sodass durch die Stirnseite keine Feuchtigkeit und kein Schmutz in den Seitenschweller eindringen kann.

Das Rollprofil ist ein Bauteil, das sich auf einfache Weise aus Platinen herstellen lässt, die aus höchstfesten Stahlsorten bestehen können, das heißt die Platinen können Streckgrenzen von 800 MPa und mehr aufweisen. Dadurch kann das Rollprofil höchste Steifigkeitsanforderungen bei relativ dünnen Wandstärken aufweisen, sodass das Gewicht des Rollprofils bezogen auf seine Steifigkeit außerordentlich gering ist.

Bevorzugt erstreckt sich das Rollprofil im Seitenschweller zumindest vom Bereich einer A-Säule bis zum Bereich eines Fersenblechs der Karosserie des Kraftfahrzeugs. Die A-Säulen bilden die vordere Begrenzung des Fahrgastraums. Zwischen der rechten und der linken A-Säule verlaufen der untere Windlauf, der die untere Auflage für die Windschutzscheibe bildet, und ein Tragrohr der Instrumententafel. Das Fersenblech bildet die hintere Begrenzung des Fußraums im Fahrgastraum. Im Bereich des Fersenblechs verläuft der so genannte Sitzquerträger, der die beiden Seitenschweller im hinteren Bereich in Fahrzeugquerrichtung miteinander verbindet. Wenn sich nun das Rollprofil vom Bereich einer A-Säule bis zum Bereich eines Fersenblechs erstreckt, kann es bei einem Seitenaufprall zusammen mit dem eigentlichen Seitenschweller die dabei entstehenden Kräfte aufnehmen und vorne über die A-Säule bzw. über den unteren Windlauf und das Tragrohr sowie hinten über den Sitzquerträger ableiten, ohne dass es zu einer nennenswerten Deformation der Fahrgastzelle kommt. Dies ist von großer Bedeutung, um Verletzungen der Passagiere vermeiden zu können.

Das Rollprofil soll auf einfache Weise nach dem Rohbau in den Seitenschweller eingebracht und dort befestigt werden können. Als Befestigungstechniken eignen sich dabei besonders Punktschweißen und Schrauben. Punktschweißen ist eine besonders einfache und damit kostengünstige Verbindungstechnik. Schrauben dagegen ermöglicht den Einsatz unterschiedlicher Werkstoffe. So kann das Rollprofil beispielsweise statt aus einer gerollten Stahlplatine auch aus CFK gebildet werden oder ein mit Aluminium-Strukturschaum gefüllter Träger oder ein Aluminiumstrangpressprofil sein. Wenn die Außenschale des Seitenschwellers für alle Derivate entsprechende Löcher zur Verschraubung aufweist, und in den Seitenschweller des gerade gebauten Kraftfahrzeugs kein Rollprofil zur zusätzlichen Verstärkung eingebracht werden muss, können die Löcher mit Stopfen verschlossen werden.

Günstigerweise ist auf der der Außenschale zugewandten Seite der Innenschale ein im Querschnitt hutförmiges Profilblech mit seinen beiden Rändern angeschweißt, das sich in Fahrzeuglängsrichtung erstreckt und in Fahrzeugquerrichtung dem Rollprofil gegenüberliegend angeordnet ist. Dieses Profilblech versteift die Innenschale des Seitenschwellers. Im Falle eines Seitencrashs, beispielsweise mit einem seitlichen Pfahl, kommt es bei höheren Kräften zu einer Deformation der Außenschale zusammen mit dem daran befestigten Rollprofil. Bereits nach einer kleinen Deformation liegt das Rollprofil dann an dem Profilblech an, sodass dieses dann zusammen mit der Innenschale ebenfalls zur Aufnahme der Crashkräfte beiträgt. Der Abstand zwischen dem Rollprofil und dem Profilblech ist daher relativ klein gewählt. Bevorzugt liegt der Abstand im Bereich zwischen zwei und fünf Millimetern.

Weitere vorteilhafte Ausgestaltungen sind Gegenstand von Unteransprüchen.

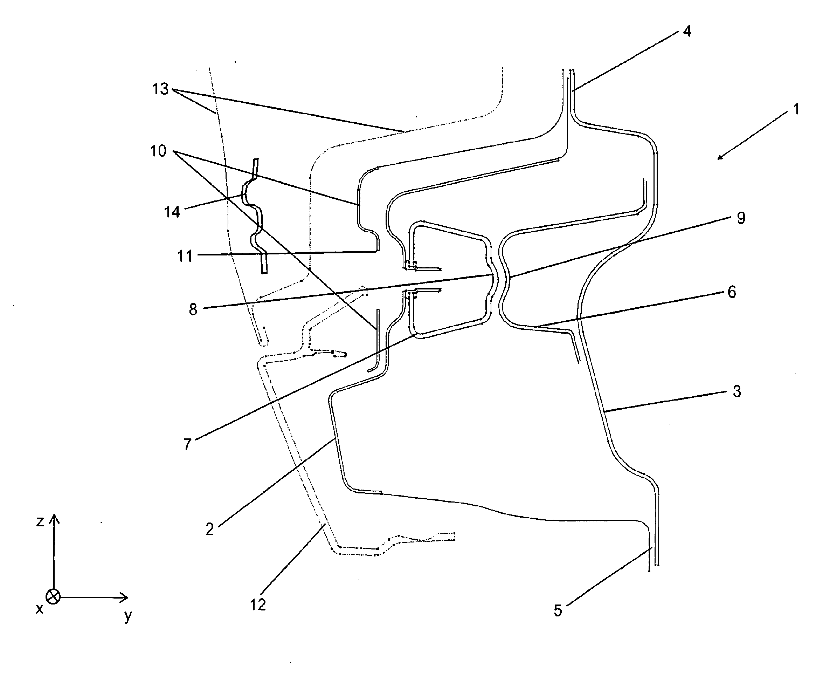

In der Zeichnung ist ein Ausführungsbeispiel der Erfindung dargestellt, anhand dessen die Erfindung im Folgenden näher beschrieben wird. Die einzige Figur zeigt in schematischer Darstellungsweise einen Schnitt durch einen Seitenschweller einer Karosserie eines Kraftfahrzeugs.

In der Figur ist ein Seitenschweller 1 dargestellt, der sich in Fahrzeuglängsrichtung x von einer A-Säule der Fahrzeugkarosserie bis zu einem hinteren Radhaus erstreckt. Der Seitenschweller 1 ist in Schalenbauweise gebaut und weist eine Außenschale 2 und eine Innenschale 3 aus Stahlblech auf. Dabei wurde die Außenschale 2 aus einer hochfesten Platine mit einer Streckgrenze von 1.000 MPa warm umgeformt. Die Außenschale 2 und die Innenschale 3 bilden gemeinsam einen oberen und einen unteren Flansch 4 und 5, über die sie miteinander verbunden sind. Auf der der Außenschale 2 zugewandten Seite der Innenschale 3 ist ein hutförmiges Profilblech 6 in Fahrzeuglängsrichtung x angeordnet, das die Innenschale 3 versteift. Das Profilblech 6 erstreckt sich über die gesamte Länge des Seitenschwellers 1. Es besteht aus einem warm umgeformten, hochfesten Stahl, also aus einem Stahl mit einer Streckgrenze von mindestens 1.000 MPa.

Dem hutförmigen Profilblech 6 gegenüberliegend ist auf der der Innenschale 3 zugewandten Seit der Außenschale 2 ein sich in Fahrzeuglängsrichtung x erstreckendes Rollprofil 7 angeschraubt. Das Rollprofil 7 besteht aus einem höchstfesten Stahl, das heißt es weist eine Streckgrenze von mehr als 800 MPa auf. Es erstreckt sich im Seitenschweller 1 vom Bereich der A-Säule bis in den Bereich eines Sitzquerträgers, der unterhalb einer hinteren Sitzreihe in Fahrzeugquerrichtung y verläuft und die beiden Seitenschweller 1 der Karosserie miteinander verbindet. Das Rollprofil 7 ist über sieben, in gleichmäßigen Abständen angeordnete Schrauben mit der Außenschale 2 verschraubt. Zwischen dem hutförmigen Profilblech 6 und dem Rollprofil 7 verbleibt nur ein geringer Abstand von etwa drei Millimetern. Der dem hutförmigen Profilblech 6 zugewandte Wandbereich 8 des Rollprofils 7 ist im Querschnitt gesehen bauchig gestaltet, während der dem Rollprofil 7 zugewandte Wandbereich 9 des hutförmigen Profilblechs 6 entsprechend konkav geformt ist. Ohne den Abstand zwischen dem Rollprofil 7 und dem hutförmigen Profilblech 6 würden der Wandbereich 8 des Rollprofils und der Wandbereich 9 des hutförmigen Profilblechs 6 flächig aneinander anliegen und in Höhenrichtung z einen Formschluss bilden.

Der Seitenschweller 1 wird auf der von der Außenschale 2 gebildeten Außenseite im oberen Bereich von einer äußeren Seitenwand 10 verdeckt. Die äußere Seitenwand 10 bildet die sichtbare äußere Beplankung der Fahrgastzelle. Sie besteht aus einem dünnen Stahlblech, das aufgrund des erforderlichen Umformgrades aus keiner höchstfesten Stahlsorte herstellbar ist. Die äußere Seitenwand 10 dient damit vor allem zur optischen Verkleidung, sie hat keine nennenswerte tragende Funktion. Im Bereich der Verschraubungen zwischen dem Rollprofil 7 und der Außenschale 2 weist die äußere Seitenwand 10 Aussparungen 11 auf, damit die Verschraubungsstellen von außen zugänglich sind. Diese Aussparungen 11 können mit Stopfen verschlossen werden. Der untere, nicht von der äußeren Seitenwand 10 verdeckte Bereich der Außenseite des Seitenschwellers 1 ist mit einer Abdeckung 12 aus einem Kunststoff verkleidet.

Der Seitenschweller 1 stellt die untere Begrenzung der seitlichen Türöffnung der Karosserie dar. Die Türöffnung ist mit einer Seitentür 13 verschließbar, die in der geschlossenen Stellung in Höhenrichtung z eine überlappung von etwa dreißig Millimetern mit dem Seitenschweller 1 aufweist. Im unteren Abschnitt der Seitentür 13 auf Höhe des Seitenschwellers 1 ist in der Seitentür 13 eine Crashverstärkung 14 aus einem höchstfesten Stahl angeordnet, die sich über die gesamte Länge der Seitentür 13 erstreckt.

Wenn es nun zu einem Seitencrash kommt, wird die eventuell punktuell in die Seitentür 13 eingeleitete Crashenergie im unteren Bereich der Seitentür 13 durch die Crashverstärkung 14 über die gesamte Länge der Seitentür 13 verteilt. Dabei verformt sich die Seitentür 13, sodass sie am Seitenschweller 1 anliegt. Der sehr steife Seitenschweller 1 wiederum verteilt die verbliebene Crashenergie über die gesamte Länge des Seitenschwellers 1 und leitet sie in die A-Säule und in den Sitzquerträger ab, sodass die Fahrgastzelle geschützt ist. Dabei wird sich bei hohen Kräften die Außenschale 2 und das damit verbundene Rollprofil 7 verformen, bis das Rollprofil 7 am hutförmigen Profilblech 6 anliegt. Ab diesem Zeitpunkt weist der Seitenschweller 1 seine maximale Steifigkeit auf, da Außenschale 2, Rollprofil 7, hutförmiges Profilblech 6 und Innenschale 3 in vollem Umfang zur Steifigkeit beitragen. Insgesamt weist der Seitenschweller 1 dann eine so hohe Steifigkeit auf, dass selbst ein lokales Eindringen eines Pfahls in die Seite der Kraftfahrzeugkarosserie keine Gefährdung für die Passagiere in der Fahrgastzelle darstellt.

Der in der Figur dargestellte Seitenschweller 1 bietet eine sehr hohe Steifigkeit. Eine so hohe Steifigkeit ist insbesondere bei Cabrios erforderlich, da die Gesamtsteifigkeit der Fahrzeugkarosserie eines Cabrios aufgrund des fehlenden Dachs deutlich unter der Gesamtsteifigkeit einer Limousine desselben Fahrzeugtyps liegt. Es kann also sein, dass für die erforderliche Gesamtsteifigkeit der Karosserie einer Limousine ein weniger steifer Seitenschweller völlig ausreichend ist. Der erfindungsgemäße Seitenschweller 1 ermöglicht es, dass in diesem Fall das Rollprofil 7 weggelassen werden kann, sodass auf diese Weise eine Anpassung an verschiedene Derivate eines Fahrzeugtyps möglich ist.

Das Rollprofil 7 ist als Montageteil gestaltet. Es kann bei den Fahrzeugderivaten, die es aufgrund ihrer Steifigkeit benötigen, von einer Stirnseite des Seitenschwellers 1 aus in diesen eingeschoben und dort mit der Außenschale 2 verschraubt werden. Die Stirnseite wird dann anschließend mit einer Abdeckung verschlossen. Die Bildung der Derivate erfolgt also nach dem Rohbau im Zuge der Endmontage der Fahrzeuge. Es müssen also nicht bereits im Rohbau verschiedene Varianten berücksichtigt werden. Dies vereinfacht den Rohbau erheblich. Auch ist auf sehr einfache Weise der abgespeckte Seitenschweller 1 ohne Rollprofil 7 darstellbar, indem das Rollprofil 7 einfach nicht montiert wird. Der abgespeckte Seitenschweller hat den Vorteil, dass er wesentlich leichter und preiswerter ist. Er setzt allerdings voraus, dass die Gesamtsteifigkeit des Fahrzeugs trotzdem ausreichend hoch ist.

## Patentansprüche

1. Seitenschweller (1) einer Karosserie eines Kraftfahrzeugs in Blechschalenbauweise, bestehend zumindest aus einer Außenschale (2) und einer Innenschale (3) aus Blech, die miteinander verschweißt sind, **dadurch gekennzeichnet, dass** der Seitenschweller (1) nach dem Rohbau der Karosserie eine stirnseitige Öffnung enthält, durch die ein Rollprofil (7) zur Versteifung einschiebbar und am Seitenschweller (1) befestigbar ist.

2. Seitenschweller nach Anspruch 1, **dadurch gekennzeichnet, dass** sich das Rollprofil (7) im Seitenschweller (1) zumindest vom Bereich einer A-Säule bis zum Bereich eines Fersenblechs der Karosserie des Kraftfahrzeugs erstreckt.

3. Seitenschweller nach Anspruch 1 oder 2, **dadurch gekennzeichnet, dass** das Rollprofil (7) mit dem Seitenschweller (1) verschraubbar und / oder punktverschweißbar ist.

4. Seitenschweller nach einem der vorhergehenden Ansprüche, **dadurch gekennzeichnet, dass** das Rollprofil (7) aus einem Blech mit höchstfester Werkstoffgüte hergestellt ist.

5. Seitenschweller nach einem der vorhergehenden Ansprüche, **dadurch gekennzeichnet, dass** auf der der Außenschale (2) zugewandten Seite der Innenschale (3) ein im Querschnitt hutförmiges Profilblech (6) angeschweißt ist, das sich in Fahrzeuglängsrichtung (x) erstreckt und in Fahrzeugquerrichtung (y) dem Rollprofil (7) gegenüberliegend angeordnet ist.

6. Seitenschweller nach Anspruch 5, **dadurch gekennzeichnet, dass** das hutförmige Profilblech (6) und das Rollprofil (7) einen Abstand zwischen 2 und 5 mm voneinander aufweisen.

7. Seitenschweller nach Anspruch 5 oder 6, **dadurch gekennzeichnet, dass** das hutförmige Profilblech (6) aus einem warm umgeformten, hochfesten Stahl besteht.

8. Seitenschweller nach einem der vorhergehenden Ansprüche, **dadurch gekennzeichnet, dass** die Außenschale (2) aus einem hochfesten, warm umgeformten Blech besteht.

9. Seitenschweller nach einem der vorhergehenden Ansprüche, **dadurch gekennzeichnet, dass** eine äußere Seitenwand (10) der Karosserie des Kraftfahrzeugs den Seitenschweller (1) zumindest teilweise überdeckt.

10. Karosserie eines Kraftfahrzeugs mit einem Seitenschweller nach einem der vorhergehenden Ansprüche, **dadurch gekennzeichnet, dass** zumindest eine Seitentür (13) in Höhenrichtung (z) eine Überlappung mit dem Seitenschweller (1) aufweist.

## Claims

1. A side sill (1) for a motor-vehicle body, in the form of a sheet-metal shell and comprising at least one outer sheet-metal shell (2) welded to one inner sheet-metal shell (3), **characterised in that** after the body carcase has been constructed, the side sill (1) is formed with a front opening through which a reinforcing roll profile (7) can be inserted and fastened to the side sill (1).

2. A side sill according to claim 1, **characterised in that** the roll profile (7) in the side sill (1) extends at least from the neighbourhood of an A-column to the neighbourhood of a rear plate of the vehicle body.

3. A side sill according to claim 1 or claim 2, **characterised in that** the roll profile (7) can be screwed and/or spot-welded to the side sill (1).

4. A side sill according to any of the preceding claims, **characterised in that** the roll profile (7) is made from a sheet of super high-strength material.

5. A side sill according to any of the preceding claims, **characterised in that** a profiled sheet (6) having a hat-shaped cross-section (3) is welded to the side of the inner shell (3) facing the outer shell (2) and extends in the longitudinal direction (x) of the vehicle and is disposed opposite the roll profile (7) in the transverse direction (y) of the vehicle.

6. A side sill according to claim 5, **characterised in that** the hat-shaped profiled sheet (6) is between 2 and 5 mm away from the roll profile (7).

7. A side sill according to claim 5 or claim 6, **characterised in that** the hat-shaped profiled sheet (6) is made of hot-formed high-strength steel.

8. A side sill according to any of the preceding claims, **characterised in that** the outer shell (2) is made of a high-strength hot-formed sheet metal.

9. A side sill according to any of the preceding claims, **characterised in that** an outer side wall (10) of the vehicle body covers at least part of the side sill (1).

10. A vehicle body comprising a side sill according to any of the preceding claims, **characterised in that** at least one side door (13) overlaps the side sill (1) in the vertical direction (z).

## Revendications

1. Bas de caisse (1) de carrosserie de véhicule automobile en construction par coque de tôle, composé d'au moins une coque externe (2) et d'une coque interne (3) en tôle, soudées l'une à l'autre,
**caractérisé en ce qu'**
après la construction brute de la carrosserie, on réalise une ouverture frontale dans le bas de caisse (1) pour y glisser un profilé de roulage (7) pour rigidifier et on le fixe au bas de caisse (1).

2. Bas de caisse selon la revendication 1,
**caractérisé en ce que**
le profilé de roulage (7) s'étend dans le bas de caisse latéral (1) au moins entre la zone de la colonne (A) jusqu'au niveau de la tôle de talon de la carrosserie du véhicule automobile.

3. Bas de caisse selon la revendication 1 ou 2,
**caractérisé en ce que**
le profilé de roulage (7) est vissé et/ou soudé par une soudure par points au bas de caisse (1).

4. Bas de caisse selon l'une des revendications précédentes,
**caractérisé en ce que**
le profilé de roulage (7) est réalisé à partir d'une tôle ayant une qualité d'ouvrage très poussée.

5. Bas de caisse selon l'une des revendications précédentes,
**caractérisé en ce que**
le côté de la coque interne (3) tourné vers la coque externe (2) comporte par soudage une tôle profilée (6) ayant en section une forme de chapeau qui s'étend dans la direction longitudinale (x) du véhicule et il est en regard du profilé (7) dans la direction transversale (y) du véhicule.

6. Bas de caisse selon la revendication 5,
**caractérisé en ce que**
la tôle profilée (6) en forme de chapeau et le profilé creux (7) ont entre eux une distance comprise entre 2 et 5 mm.

7. Bas de caisse selon la revendication 5 ou 6,
**caractérisé en ce que**
la tôle profilée (6) en forme de chapeau est réalisée en un acier très résistant, transformé à chaud.

8. Bas de caisse selon l'une des revendications précédentes,
**caractérisé en ce que**
la coque externe (2) est réalisée en une tôle très résistante, transformée à chaud.

9. Bas de caisse selon l'une des revendications précédentes,
**caractérisé en ce qu'**
une paroi latérale extérieure (10) de la carrosserie du véhicule couvre au moins en partie le bas de caisse (1).

10. Carrosserie de véhicule automobile comportant un seuil de porte selon l'une des revendications précédentes,
**caractérisée en ce qu'**
au moins une portière latérale (13) présente dans le sens de la hauteur (z), un chevauchement avec le bas de caisse (1).
